# EUROPÄISCHE PATENTSCHRIFT

(11) **EP 3 696 515 B1**
(45) Veröffentlichungstag und Bekanntmachung des Hinweises auf die Patenterteilung: **28.09.2022**
(21) Anmeldenummer: 19157740.2
(22) Anmeldetag: 18.02.2019
(51) Int. Cl.: G01F 23/284, G01S 13/88, G01S 7/03, H01P 5/08, H01Q 1/22, H01Q 1/40, H01Q 1/44, H01Q 9/04, H01Q 9/06, H01Q 13/02, H01Q 19/08, H01Q 23/00

(54) **RADARMODUL**
RADAR MODULE
MODULE RADAR

(43) Veröffentlichungstag der Anmeldung: 19.08.2020
(73) Patentinhaber: VEGA Grieshaber KG, 77709 Wolfach (DE)
(72) Erfinder: WÄLDE, Steffen, 78078 Niedereschach (DE); MÜLLER, Christoph, 77728 Oppenau (DE)
(74) Vertreter: Maiwald Patent- und Rechtsanwaltsgesellschaft mbH

(56) Entgegenhaltungen:
- EP-A1- 1 615 007
- DE-A1-102009 028 620
- DE-A1-102015 119 690
- US-A1- 2003 151 560

## Beschreibung

### Gebiet der Erfindung

Die Erfindung betrifft ein Radarmodul zur Prozessautomatisierung sowie die Verwendung eines Radarmoduls zur Füllstands- und/oder Grenzstandüberwachung und ein Verfahren zur Montage eines Radarmoduls.

### Hintergrund der Erfindung

In der Prozessautomation, insbesondere in der Füllstands- und/oder Grenzstandüberwachung, werden eine Vielzahl von Halbleiterchips eingesetzt, welche jedoch möglichst keinen mechanischen Belastungen ausgesetzt sein sollten. Da die Halbleiter aus Kristallen gefertigt sind, sind diese meist sehr brüchig und spröde. Selbst kleinste mechanische Kräfte führen zu Brüchen und somit zur Zerstörung des Halbleiters. Zudem setzen Umwelteinflüsse wie Feuchtigkeit oder Partikel dem Halbleiter zu, so dass unter Umständen seine Funktion nicht aufrechterhalten werden kann. Durch die zunehmende Vielfältigkeit der Anwendungen von Radarchips steigen auch die Einsatzszenarien, in welchen Radarchips eine erhöhte Widerstandsfähigkeit aufweisen sollten.

DE 10 2015 119690 A1 offenbart einen radarbasierten Füllstandsensor mit mindestens einem Halbleiterelement, umfassend mindestens ein Halbleiter-Chip und ein Chipgehäuse, in dem der mindestens eine Halbleiter-Chip angeordnet ist, wobei der mindestens eine Halbleiter-Chip mindestens ein Koppelelement aufweist.

US 2003 151560 A1 offenbart ein Antennensystem für eine Füllstandsmessvorrichtung zum Aussenden von Mikrowellen mittels eines Antennenhoms.

### Zusammenfassung

Mit den im Folgenden beschriebenen Ausführungsformen kann in vorteilhafter Weise ein verbessertes Radarmodul bereitgestellt werden.

Ein Aspekt betrifft ein Radarmodul zur Prozessautomatisierung gemäß Anspruch 1.

Diese Anordnung hat den Vorteil, dass der Radarsignalleiter und der Hohlleiter mechanisch voneinander entkoppelt sind, so dass eine Kraft, welche auf den Hohlleiter einwirkt, nicht an den Radarsignalleiter und die Radarsignalquelle weitergegeben wird. Somit wird ein Halbleiterchip vor einer externen Krafteinwirkung effektiv geschützt. Zusätzlich hat diese Anordnung den Vorteil, dass eine Toleranz oder Varianz in der vertikalen Erstreckungsrichtung durch die Überlappung ausgeglichen wird und somit die Funktionssicherheit des Radarmoduls gewährleistet wird. Ein weiterer Vorteil ist, dass die Montage der Radarsignalquelle vereinfacht wird, da keine Rücksicht auf die Fragilität der Radarsignalquelle mehr genommen werden muss, da diese bereits montiert ist, wenn der Hohlleiter an die Radarsignalquelle bzw. dem Radarsignalleiter montiert wird.

In anderen Worten wird auf eine Radarsignalquelle, insbesondere auf die Antenne einer Radarsignalquelle, der Radarsignalleiter aufgebracht, welcher insbesondere ein zylinderförmiger Stift sein kann. Dabei wird ein Radarsignal, welches von der Radarsignalquelle erzeugt und/oder ausgesendet wird, insbesondere von der Antenne der Radarsignalquelle durch den Radarsignalleiter aufgenommen, welcher das Radarsignal durch sich hindurchleitet und auf einer gegenüberliegenden zur Radarsignalquelle, insbesondere einem Füllgut hin zugewandten Seite, wieder abstrahlt. Zudem kann ein Hohlleiter an dem Radarsignalleiter angeordnet sein, welcher das Radarsignal richtet und somit eine Auskopplung vermeidet, um die Nebenkeulen hinsichtlich der Abstrahleigenschaften der Antenne zu unterdrücken. Der Hohlleiter weist eine Öffnung bzw. eine Bohrung auf, welche eine Axialrichtung ausbildet. In diese Öffnung ragt der Radarsignalleiter hinein, so dass sich der Radarsignalleiter und der Hohlleiter überlappen. Dies kann insbesondere dazu dienen, dass das vom Radarsignalleiter ausgesendete Radarsignal in den Hohlleiter eingekoppelt wird. Zudem kann der Hohlleiter eine Hornantenne aufweisen, welche auch eine Linse aufweisen kann, wobei beide Komponenten zur Ausrichtung bzw. zum Fokussieren des Radarsignals dienen. Bei dem Hohlleiter kann es sich insbesondere um eine metallische Röhre oder Ähnliches handeln, welche an einer dem Füllgut zugewandten Seite eine Hornantenne aufweist. In der Hornantenne kann eine Linse, insbesondere eine dielektrische Linse, angeordnet werden, welche der Fokussierung des Radarsignals zuträglich sein kann. Des Weiteren kann die Axialrichtung einer Aussenderichtung des Radarsignals entsprechen, insbesondere ist die Axialrichtung orthogonal zu einer Oberfläche der Radarsignalquelle ausgebildet oder orthogonal zu der Oberfläche eines zu messenden Füll- oder Schüttguts. Dabei kann die Überlappung eine Toleranz der Erstreckungslängen der Radarsignalquelle entlang der Axialrichtung ausgleichen oder ermöglichen, um so eventuellen Fertigungsungenauigkeiten entgegenzuwirken.

Der Hohlleiter ist von der Radarsignalquelle und/oder dem Radarsignalleiter mechanisch entkoppelt.

In anderen Worten ist der Hohlleiter und die Radarsignalquelle sowie der Radarsignalleiter derart ausgelegt, dass keine Kräfte zwischen den genannten Komponenten übertragen werden können. Dies kann insbesondere durch einen Spalt zwischen dem Hohlleiter und dem Radarsignalleiter erreicht werden. Dies hat den Vorteil, dass eine mechanische Belastung auf den Hohlleiter nicht an die Radarsignalquelle gelangt und somit die Radarsignalquelle vor einer Beschädigung durch Krafteinwirkung geschützt ist.

Gemäß einer Ausführungsform kann der Radarsignalleiter vom Hohlleiter im Bereich der Überlappung orthogonal zu der Axialrichtung umlaufend um den Radarsignalleiter beabstandet sein. In anderen Worten wird orthogonal zur Axialrichtung ein Spalt zwischen dem Radarsignalleiter und dem Hohlleiter ausgebildet, so dass keine mechanischen Kräfte vom Hohlleiter auf den Signalleiter übertragen werden können. Dabei ist der Hohlleiter vom Radarsignalleiter derart beabstandet, dass im gesamten Bereich der Überlappung ein Spalt ausgebildet wird. Diese Ausführungsform kann den Vorteil mit sich bringen, dass die Radarsignalquelle von einer eventuellen Belastung geschützt ist und somit die Langlebigkeit der Radarsignalquelle erhöht wird.

Gemäß einer Ausführungsform kann das Radarmodul einen Träger umfassen, wobei die Radarsignalquelle an dem Träger befestigt ist. In anderen Worten kann der Träger eine Leiterplatte oder Ähnliches sein, welche eine erhöhte Stabilität aufweist. Dabei kann das Radarmodul an dem Träger befestigt werden, insbesondere mittels einer stoff-, form- oder kraftschlüssigen Verbindung, wie beispielsweise einer Klebverbindung. Dies kann den Vorteil mit sich bringen, dass die Radarsignalquelle aufgrund der Stabilität des Trägers bzw. der Leiterplatte vor mechanischen Belastungen geschützt ist, so dass die Ausfallsicherheit der Radarsignalquelle erhöht werden kann.

Gemäß einer Ausführungsform der Erfindung kann der Träger ein Gehäuse aufweisen, welches zumindest die Radarsignalquelle umhaust. Alternativ kann das Gehäuse auch die Radarsignalquelle, den Radarsignalleiter und den Hohlleiter umhausen, so dass alle Komponenten des Radarmoduls vor äußeren Einflüssen, wie beispielsweise Feuchtigkeit oder Ähnlichem, geschützt sind. Das Gehäuse kann dabei aus einem metallischen Werkstoff gefertigt sein und/oder aus einem (metallisierten) Kunststoffverbund, welcher eine erhöhte Widerstandsfähigkeit gegenüber mechanischen Einflüssen aufweist, wobei das Gehäuse mittels einer Verbindung, insbesondere einer form-, kraft- und/oder stoffschlüssigen Verbindung, an dem Träger festgelegt sein kann. Beispielsweise kann das Gehäuse mittels einer Schraubverbindung an dem Träger festgelegt sein. Dies kann den Vorteil mit sich bringen, dass sowohl das Gehäuse die Radarsignalquelle vor externen Einflüssen schützt, wie beispielsweise Feuchtigkeit oder Ähnlichem, und zusätzlich eine erhöhte Lebensdauer des gesamten Radarmoduls gewährleistet werden kann, da mittels einer lösbaren Verbindung zwischen dem Gehäuse und dem Träger die Radarsignalquelle ausgetauscht werden kann.

Gemäß einer Ausführungsform kann der Hohlleiter an einer Öffnung des Gehäuses angeordnet sein, durch welche der Radarsignalleiter in die Öffnung des Hohlleiters hineinragt, und wobei der Hohlleiter und das Gehäuse einteilig ausgebildet sind. In anderen Worten weist das Gehäuse eine Öffnung auf, wobei an diese Öffnung der Hohlleiter angebracht ist. Insbesondere sind der Hohlleiter und die Öffnung des Gehäuses koaxial zueinander angeordnet. Insbesondere bildet die Kombination aus Gehäuse und Hohlleiter eine rohrähnliche Struktur aus, in welche der Radarsignalleiter hineinragt. Zudem können das Gehäuse und der Hohlleiter einteilig ausgeführt werden, beispielsweise indem beide Komponenten aus einem Umformteil, wie beispielsweise einem Tiefziehteil oder einem Druckgussteil, hergestellt werden. Alternativ kann der Hohlleiter und das Gehäuse auch zweiteilig ausgeführt sein, wobei der Hohlleiter beispielsweise an dem Gehäuse mittels einer Schweißverbindung oder Ähnlichem festgelegt werden kann. Der Vorteil dieser Ausführungsform ist, dass durch die Funktionsintegration der beiden Bauteile Hohlleiter und Gehäuse eine Vereinfachung der Fertigung bzw. der Montage erreicht werden kann, was zu einer Reduzierung der Fertigungskosten führt.

Gemäß einer Ausführungsform kann zwischen dem Gehäuse und dem Träger ein Hohlraum ausgebildet sein, wobei der Hohlraum mit einer Vergussmasse befüllt sein kann. In anderen Worten besteht ein Hohlraum zwischen dem Träger und dem Gehäuse, wobei auf dem Träger die Radarsignalquelle und auf der Radarsignalquelle der Radarsignalleiter angeordnet ist, welcher in eine Öffnung des Gehäuses bzw. in den Hohlleiter hineinragt. Der Hohlraum zwischen Träger und Gehäuse, worin sich die Anordnung aus Radarsignalquelle befindet, kann mit einer Vergussmasse aufgefüllt werden, so dass die Radarsignalquelle vor Feuchtigkeit oder anderen Einflüssen geschützt ist sowie eine erhöhte Stabilität innerhalb des Gehäuses geschaffen wird, um die Radarsignalquelle vor mechanischen Belastungen weiter zu schützen. Bei der Vergussmasse kann es sich insbesondere um einen Schaum oder ein Gel handeln, welcher innerhalb des Hohlraums aushärtet.

Gemäß einer Ausführungsform kann die Radarsignalquelle mittels einer form-, kraft- und/oder stoffschlüssigen Verbindung, insbesondere einer Klebverbindung, an dem Träger befestigt sein. Zudem kann die form-, kraft- und/oder stoffschlüssige Verbindung eine Erstreckungshöhe entlang der Axialrichtung aufweisen. In anderen Worten ist die Radarsignalquelle an dem Träger befestigt, wobei diese Befestigung insbesondere durch eine Klebverbindung ausgebildet werden kann. Eine Klebverbindung kann dabei ein doppelseitiges Klebeband, ein Harz oder Harzverbund oder ein Gel sein, welche über die Zeit aushärten. In einer alternativen Ausführungsform kann die Radarsignalquelle auch mittels einer Steckverbindung oder eines Bajonettverschlusses an dem Träger befestigt werden. Dabei weist die form-, kraft- und/oder stoffschlüssige Verbindung eine Erstreckungshöhe entlang der Axialrichtung auf, wobei die Erstreckungshöhe einen Abstand zwischen der Radarsignalquelle und dem Träger ausbildet. In Abhängigkeit der verwendeten Verbindungstechnologie als auch in Abhängigkeit der Fertigungstoleranz der verwendeten Verbindungstechnologie kann dieser Abstand zwischen der Radarsignalquelle und dem Träger variieren. Der Vorteil dieser Ausführungsform kann sein, dass durch die Montage der Radarsignalquelle mittels einer Klebverbindung oder Ähnlichem die Fertigungskosten des Radarmoduls deutlich reduziert werden, da diese Verbindungen einen hohen Automatisierungsgrad ermöglichen.

Gemäß einer Ausführungsform kann die Überlappung zwischen dem Radarsignalleiter und dem Hohlleiter eine Toleranz der Erstreckungshöhe der form-, kraft- und/oder stoffschlüssigen Verbindung ermöglichen. In anderen Worten weist die form-, kraft- und/oder stoffschlüssige Verbindung von Radarmodul zu Radarmodul eine unterschiedliche Erstreckungshöhe auf, wobei diese unterschiedliche Erstreckungshöhe durch die Fertigungstechnologie bedingt sein kann. Eine Varianz oder Toleranz der Erstreckungshöhe kann durch die Überlappung kompensiert werden, indem der Radarsignalleiter in dem Hohlleiter in Abhängigkeit der Erstreckungshöhe dem Füllgut näher ist oder von dem Füllgut weiter entfernt ist. Dies bringt den Vorteil mit sich, dass mittels der Anordnung zwischen Radarsignalleiter und Hohlleiter die Fertigungstoleranzen bei der Montage der Radarsignalquelle auf dem Träger größer gewählt werden können, so dass eine deutliche Einsparung der Produktionskosten ermöglicht wird.

Gemäß einer Ausführungsform kann der Hohlleiter eine Hornantenne ausbilden und/oder an eine Hornantenne angeschlossen sein. In anderen Worten kann der Hohlleiter eine Hornantenne sein oder diese ausbilden oder an eine angeschlossen sein, wobei die Hornantenne auch eine dielektrische Linse zur Fokussierung des Radarsignals aufweisen kann. Dies kann den Vorteil ausbilden, dass das Radarsignal besser fokussiert werden kann, um eine Brennweite einstellen zu können.

Gemäß einer Ausführungsform kann der Radarsignalleiter an seinem, einem dem Füllgut zugewandten Ende, eine Kegelform, eine Kegelstumpfform oder eine Halbkugelform aufweisen. In anderen Worten kann die Geometrie des Radarsignalleiters verändert werden, insbesondere an der Seite des Radarsignalleiters, welcher in den Hohlleiter hineinragt bzw. einem Füllgut zugewandt ist. Unterschiedliche Geometrien des Radarsignalleiters können in gewissen Anwendungsszenarien vorteilhaft zur Einkopplung des Radarsignals in den Hohlleiter sein.

Der Radarsignalleiter kann aus einem dielektrischen Material bestehen, dessen Permittivität beispielsweise zwischen 2 und 15 liegt

Gemäß einer Ausführungsform kann der Radarsignalleiter einen parabelförmigen, einen quadratischen, einen rechteckigen, ovalen, elliptischen und/oder runden Querschnitt, insbesondere Querschnittsform, aufweisen. In anderen Worten kann die Querschnittsform des Radarsignalleiters variieren, welche insbesondere in Abhängigkeit des Einkoppelns oder des Fokussierens des Radarsignals ausgewählt werden kann.

Gemäß einer Ausführungsform kann die Querschnittsform des Hohlleiters der Querschnittsform des Radarsignalleiters entsprechen. In anderen Worten wird der Querschnitt des Radarsignalleiters in Abhängigkeit des Querschnitts des Hohlleiters gewählt und andersherum. Dies kann insbesondere vorteilhaft sein, wenn ein Spalt zwischen dem Hohlleiter und dem Radarsignalleiter ausgebildet werden kann. Zudem kann dies vorteilhaft sein, dass eine Einkopplung des Radarsignals in den Hohlleiter in Abhängigkeit der Querschnittsform der beiden Komponenten und in Abhängigkeit eines Anwendungsszenarios ausgewählt werden kann, sodass eine Anpassung an das Anwendungsszenario erfolgen kann.

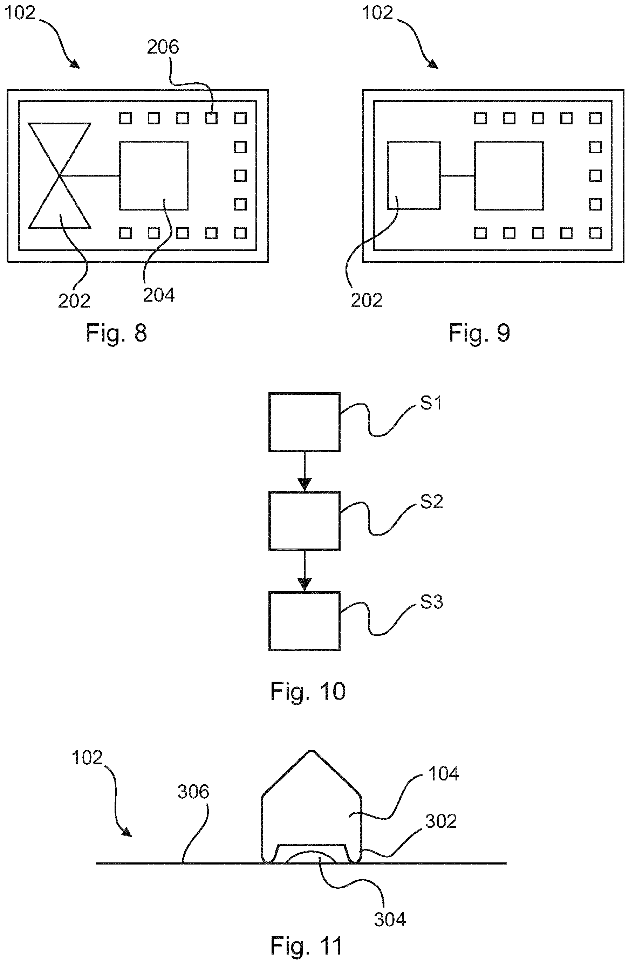

Gemäß einer Ausführungsform kann zwischen dem Hohlleiter und dem Radarsignalleiter ein Spalt ausgebildet sein, so dass keine Kraftübertragung von dem Hohlleiter auf den Radarsignalleiter stattfindet. In anderen Worten sind der Hohlleiter und der Radarsignalleiter koaxial bzw. parallel oder anhand ähnlicher geometrischer Ausrichtungen zueinander ausgeführt, so dass durch die Beabstandung des Hohlleiters zu dem Radarsignalleiter, ein Spalt entsteht. Dabei kann der Spalt umlaufend um den Radarsignalleiter die gleiche Breite aufweisen. Der Spalt sorgt insbesondere dafür, dass keine Kraftübertragung zwischen dem Hohlleiter und dem Radarsignalleiter stattfinden kann, insbesondere indem eine Bewegung des Hohlleiters aufgrund des Spaltes nicht an den Radarsignalleiter übertragen wird. Somit kann der Spalt zwischen dem Radarsignalleiter und dem Hohlleiter als eine Art Puffer fungieren. Dies kann insbesondere vorteilhaft sein, da mit einfachen Mitteln, wie bspw. ein Spalt, die Ausfallwahrscheinlichkeit der Radarsignalquelle bzw. des Radarmoduls reduziert werden kann. Gemäß einer Ausführungsform kann der Radarsignalleiter ein von dem Füllgut abgewandtes Ende aufweisen, wobei das abgewandte Ende in einem definierten Abstand zur Radarsignalquelle angeordnet ist. In anderen Worten kann der Radarsignalleiter etwas oberhalb der Radarsignalquelle, insbesondere oberhalb der Antenne der Radarsignalquelle, angeordnet werden, wobei dies mittels einer Art von Füßen des Radarsignalleiters bewerkstelligt wird. Dies kann den vorteilhaften Effekt aufweisen, dass die Montage des Radarsignalleiters auf der Radarsignalquelle vereinfacht wird, insbesondere wenn der Radarsignalleiter mittels einer Vergussmasse an der Radarsignalquelle angeordnet wird. Dadurch könnte der Radarsignalleiter lediglich auf der Radarsignalquelle positioniert werden, um mit der Radarsignalquelle verbunden zu werden, ohne dass die Antenne von einer Vergussmasse verdeckt wird. Dies wird insbesondere in der Fig. 11 und der dazugehörigen Beschreibung erläutert.

Ein weiterer Aspekt betrifft gemäß Anspruch 11 die Verwendung eines Radarmoduls, wie voranstehend und nachfolgend beschrieben, zur Prozessautomatisierung oder Überwachung eines Raumbereichs anstelle einer Lichtschranke, beispielsweise im Bereich einer Maschine.

Ein weiterer Aspekt betrifft gemäß Anspruch 12 ein Verfahren zur Montage eines Radarmoduls, wie voranstehend und nachfolgend beschrieben. In anderen Worten kann die Radarsignalquelle mit einem Radarsignalleiter vorkonfektioniert sein oder die Radarsignalquelle mit einem Radarsignalleiter bestückt bzw. verbunden werden. Auf das Halbzeug bestehend aus Radarsignalquelle und Radarsignalleiter kann ein Hohlleiter montiert werden. Dabei wird die Öffnung des Hohlleiters über den Radarsignalleiter gestülpt, so dass eine überlappende Verbindung hergestellt werden kann. Insbesondere kann der Radarsignalleiter in den Hohlleiter hineinragen. Dies hat den Vorteil, dass eine mechanische Entkopplung zwischen dem Radarsignalleiter und dem Hohlleiter ausgebildet werden kann, so dass eine auf den Hohlleiter einwirkende Kraft nicht an die Radarsignalquelle weitergeleitet wird. Zudem kann der Montagevorgang deutlich vereinfacht werden, da beide Verfahrensschritte sich einfach automatisieren lassen, so dass die Fertigungskosten des Radarmoduls deutlich gesenkt werden können.

Das Verfahren kann den Schritt aufweisen, wobei eine form-, kraft- und/oder stoffschlüssige Verbindung zwischen einem Träger und der Radarsignalquelle hergestellt werden kann. Dabei kann die form-, kraft- und/oder stoffschlüssige Verbindung eine Dicke aufweisen. Eine Toleranz oder Varianz der Dicke der form-, kraft- und/oder stoffschlüssigen Verbindung kann durch die überlappende Verbindung ermöglicht werden. In anderen Worten kann die Radarsignalquelle mittels einer form-, kraft- und/oder stoffschlüssigen Verbindung, insbesondere einer Klebverbindung, auf dem Träger befestigt werden, wobei die Verbindung eine Dicke aufweist, die in Abhängigkeit des Fertigungsverfahrens oder des Einzelfalls variieren kann. Die überlappende Verbindung ist dabei derart ausgeführt, dass eine Toleranz der Dicke oder Varianz der Dicke durch die überlappende Verbindung ausgeglichen wird, so dass der Radarsignalleiter das Radarsignal in den Hohlleiter einkoppeln kann. Dies hat den Vorteil, dass ein erhöhter Automatisierungsgrad der Fertigung des Radarmoduls erreicht werden kann, insbesondere die Montage vereinfacht, da die Fertigungstoleranzen der form-, kraft- und/oder stoffschlüssigen Verbindung reduziert werden können bzw. erhöht werden können, was zu einem Kosteneinsparungseffekt führen kann.

Merkmale und Elemente des Radarmoduls, so wie voranstehend und nachfolgend beschrieben, können Merkmale, Elemente und Schritte des Verfahrens, so wie voranstehend und nachfolgend beschrieben sein und umgekehrt.

### Kurze Beschreibung der Figuren

Fig. 1 zeigt ein Radarmodul gemäß einem Ausführungsbeispiel.
Fig. 2 zeigt ein Radarmodul gemäß einem Ausführungsbeispiel.
Fig. 3 zeigt einen Ausschnitt eines Radarmoduls gemäß einem Ausführungsbeispiel.
Fig. 4 zeigt einen Ausschnitt eines Radarmoduls gemäß einem Ausführungsbeispiel.
Fig. 5 zeigt einen Ausschnitt eines Radarmoduls gemäß einem Ausführungsbeispiel.
Fig. 6 zeigt ein Radarmodul gemäß einem Ausführungsbeispiel.
Fig. 7 zeigt ein Radarmodul gemäß einem Ausführungsbeispiel.
Fig. 8 zeigt eine Radarsignalquelle gemäß einem Ausführungsbeispiel.
Fig. 9 zeigt eine Radarsignalquelle gemäß einem Ausführungsbeispiel.
Fig. 10 zeigt ein Flussdiagramm zur Illustration von Schritten eines Verfahrens zum Montieren eines Radarmoduls gemäß einem Ausführungsbeispiel.
Fig. 11 zeigt einen Ausschnitt des Radarmoduls gemäß einem Ausführungsbeispiel.

Die Figuren sind lediglich schematisch und nicht maßstabsgetreu. In den Figuren können gleiche, gleichwirkende oder ähnliche Elemente mit gleichen Bezugszeichen versehen sein.

### Detaillierte Beschreibung von Ausführungsbeispielen

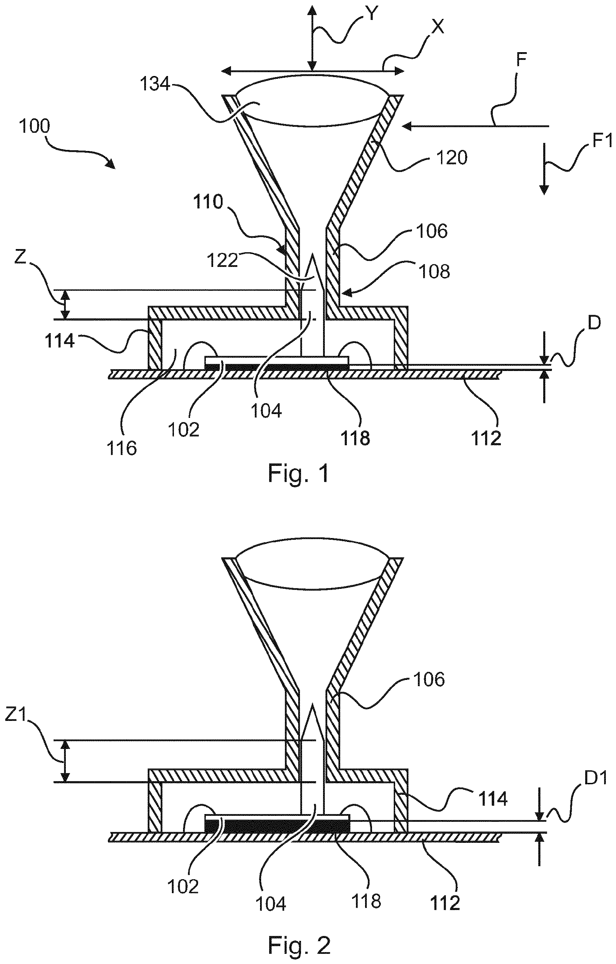

Fig. 1 zeigt ein Radarmodul 100 gemäß einem Ausführungsbeispiel. Das Radarmodul 100 kann als Füllstandradar ausgebildet sein, und insbesondere als Radarmodul für die Prozessautomatisierung und/oder die Überwachung eines Bereichs, beispielsweise als Ersatz einer Lichtschranke. Dabei umfasst das Radarmodul eine Radarsignalquelle 102, welche mittels einer Verbindung 118 an dem Träger 112 befestigt ist. Auf der Radarsignalquelle 102 ist ein dielektrischer Radarsignalleiter 104 angeordnet. Bei dem Radarsignalleiter 104 kann es sich um einen zylinderförmigen Stift, welcher spitz zuläuft, handeln. Der Radarsignalleiter 104 ragt in den Hohlleiter 106 hinein. Der Hohlleiter 106 ist Teil eines Gehäuses 114, wobei der Hohlleiter 106 und das Gehäuse 114 einteilig ausgeführt sein können. Der Hohlleiter 106 weist eine Öffnung 108 auf, in welche der Radarsignalleiter 104 hineinragt. Dabei überlappen sich der Radarsignalleiter 104 und der Hohlleiter 106. In dem Bereich der Überlappung 110 kann ein Spalt zwischen dem Radarsignalleiter 104 und dem Hohlleiter 106 ausgebildet sein. Dabei kann der Spalt insbesondere über die Überlappung Z oder einen Teil der Überlappung Z angeordnet sein. Der Bereich der Überlappung Z variiert in Abhängigkeit der Dicke, welche durch eine Erstreckungshöhe D der Verbindung 118 entlang der Axialrichtung Y variieren kann. Des Weiteren kann der Hohlleiter 106 an einer Hornantenne 120 angeordnet sein. Die Hornantenne 120 kann dabei eine dielektrische Linse 134 aufweisen. Dabei kann orthogonal zur Axialrichtung Y eine orthogonale Richtung X ausgebildet sein, in welche der Radarsignalleiter 104 von dem Hohlleiter 106 beabstandet sein kann. Auf den Hohlleiter 106, die Hornantenne 120, die Linse 134 und/oder das Gehäuse 114 kann eine Kraft F und/oder eine Kraft F1 einwirken, wobei sich die eben genannten Komponenten bewegen bzw. verformen können, jedoch dabei nicht diese Bewegung oder Verformung auf den Radarsignalleiter 104 und/oder die Radarsignalquelle 102 übertragen.

Fig. 2 zeigt ein Radarmodul 100 gemäß einem Ausführungsbeispiel. In diesem Ausführungsbeispiel weist die Verbindung 118 eine alternative Dicke D1 auf. Diese alternative Dicke D1 kann beispielsweise aus einer Varianz der Verbindung 118 durch die Fertigungstechnologie resultieren. Durch die erhöhte Dicke D1 ragt der Radarsignalleiter 104 weiter in den Hohlleiter 106 hinein. Trotz dieser Veränderung der Dicke D1 und der Überlappung Z1 wird das Radarsignal in den Hohlleiter 106 eingekoppelt. Dabei ist der Radarsignalleiter 104 auf der Radarsignalquelle 102 angebracht. Die Radarsignalquelle ist mittels der Verbindung 118 an dem Träger 112 befestigt. An dem Träger 112 kann das Gehäuse 114 befestigt werden, wobei das Gehäuse 114 und der Hohlleiter 106 einteilig ausgeführt sein können.

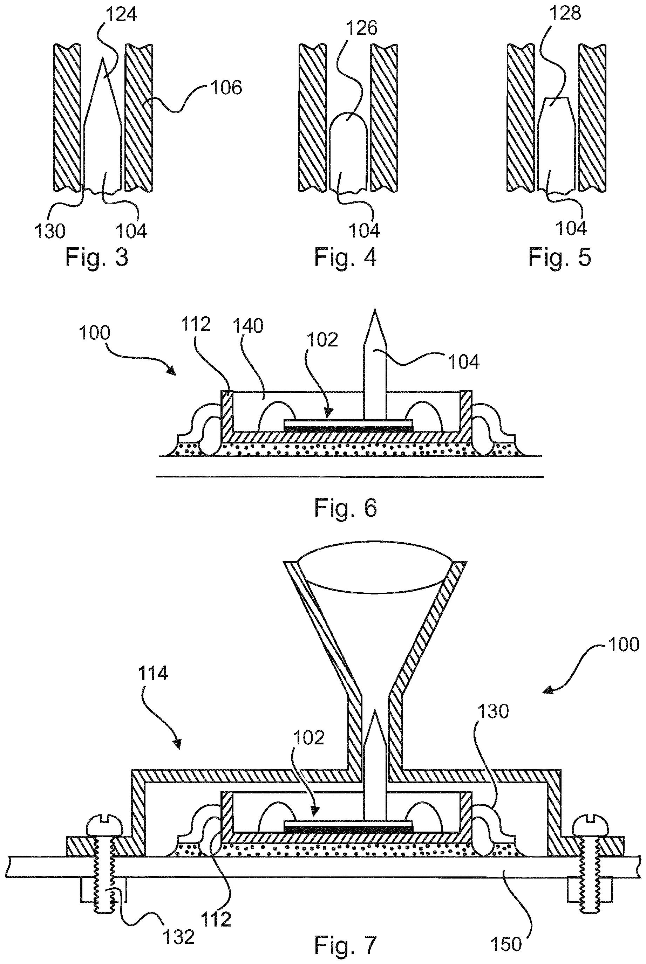

Fig. 3 zeigt ein Ausführungsbeispiel, wobei der Radarsignalleiter 104 in dem Hohlleiter 106 angeordnet ist. Dabei bildet sich ein Spalt 130 zwischen dem Radarsignalleiter 104 und dem Hohlleiter 106 aus. Der Radarsignalleiter 104 weist dabei ein Ende auf, welches dem Füllgut zugewandt ist und das eine Kegelform beschreibt 124.

Fig. 4 zeigt eine Ausführungsform, wobei der Radarsignalleiter 104 ein halbkugelförmiges Ende 126 aufweist.

Fig. 5 zeigt eine Ausführungsform des Radarsignalleiters 104, wobei das Ende des Radarsignalleiters aus einem Kegelstumpf 128 gebildet werden kann.

Fig. 6 zeigt ein Ausführungsbeispiel des Radarmoduls 100, wobei das Radarmodul 100 einen Träger 112 aufweist, an dem die Radarsignalquelle 102 befestigt sein kann. An der Radarsignalquelle 102 kann ein Radarsignalleiter 104 angeordnet sein. Der Träger 112 ist dabei mit einer Vergussmasse 140 befüllt, so dass die Vergussmasse 140 den Radarsignalleiter 104 an der Radarsignalquelle 102 befestigt. Des Weiteren kann die Vergussmasse 140 die Radarsignalquelle vor Umwelteinflüssen, wie beispielsweise Feuchtigkeit, schützen.

Fig. 7 zeigt ein Ausführungsbeispiel. Das Radarmodul 100 kann an einem Bauteil (Platine) 150 festgelegt werden. Dabei kann das Radarmodul 100 in Signalverbindung mit dem Bauteil 150 stehen, beispielsweise durch einen oder mehrere Bond-Drähte. Der Träger 112 kann über eine Verbindung 130 an die Platine 150 angeschlossen sein. Zudem kann das Gehäuse 114 des Radarmoduls 100 an dem Bauteil 150 mittels einer Schraubverbindung 132 festgelegt sein.

Fig. 8 zeigt ein Ausführungsbeispiel einer Radarsignalquelle. Die Radarsignalquelle umfasst dabei eine Antennenanordnung 202 sowie ein Element 204 zum Erzeugen des Radarsignals. Dabei kann die Radarsignalquelle 102 Bondpads 206 aufweisen, welche dazu ausgelegt sein können, die Radarsignalquelle mit dem Träger 112 zu kontaktieren.

Fig. 9 zeigt ein Ausführungsbeispiel der Radarsignalquelle 102 mit einer alternativen Antennenanordnung 202, wobei die Antennenanordnung durch ein Quadrat gebildet werden kann.

Fig. 10 zeigt ein Flussdiagramm zur Illustration von Schritten eines Verfahrens zum Montieren eines Radarmoduls gemäß einem Ausführungsbeispiel. Das Verfahren kann dabei ein Anordnen S1 eines Radarsignalleiters umfassen. Zudem kann das Verfahren ein Montieren S2 eines Hohlleiters umfassen. Des Weiteren kann das Verfahren ein Herstellen einer form-, kraft- und/oder stoffschlüssigen Verbindung S3 umfassen.

Fig. 11 zeigt ein weiteres Ausführungsbeispiel. Die Radarsignalquelle 102 weist eine Oberfläche 306 auf. Auf der Oberfläche 306 ist eine Antennenstruktur 304 angeordnet. Oberhalb der Antennenanordnung 304 ist der Radarsignalleiter 104 angeordnet. Der Radarsignalleiter 104 weist eine Art Füße oder Steg 302 auf, welche den Radarsignalleiter 104 in einem definierten Abstand zur Oberfläche 306 halten. Dies kann vorteilhaft sein, da ein Radarsignal, welches aus der Antennenstruktur 304 emittiert wird, optimal vom Hohlleiter 104 aufgenommen werden kann. Zudem kann diese Ausführungsform die Montage des Radarsignalleiters 104 auf der Oberfläche 306 der Radarsignalquelle 102 vereinfachen.

Ergänzend sei darauf hingewiesen, dass "umfassend" und "aufweisend" keine anderen Elemente ausschließt und die unbestimmten Artikel "eine" oder "ein" keine Vielzahl ausschließen. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Radarmodul (100) zur Prozessautomatisierung aufweisend:
- eine Radarsignalquelle (102) eingerichtet zum Erzeugen und Aussenden eines Radarsignals,
- ein dielektrischer Radarsignalleiter (104), welcher an der Radarsignalquelle (102) befestigt ist, eingerichtet zur Aufnahme des Radarsignals,
- einen Hohlleiter (106), wobei der Hohlleiter (106) eine Öffnung (108) aufweist,
wobei die Öffnung (108) eine Axialrichtung (Y) ausbildet,
wobei der Radarsignalleiter (104) in die Öffnung (108) des Hohlleiters (106) derart hineinragt, dass der Hohlleiter (106) und der Radarsignalleiter (104) entlang der Axialrichtung (Y) eine Überlappung (Z) ausbilden, um das Radarsignal in den Hohlleiter (106) einzukoppeln, **dadurch gekennzeichnet, dass** der Hohlleiter (106) von der Radarsignalquelle (102) und/oder dem Radarsignalleiter (104) mechanisch entkoppelt ist.

2. Radarmodul gemäß Anspruch 1, wobei der Radarsignalleiter (104) vom Hohlleiter (106) im Bereich (110) der Überlappung (Z) orthogonal (X) zu der Axialrichtung (Y), umlaufend um den Radarsignalleiter (104), beabstandet ist.

3. Radarmodul gemäß einem der vorherigen Ansprüche, wobei das Radarmodul (100) einen Träger (112) umfasst, wobei die Radarsignalquelle (102) an dem Träger (112) befestigt ist.

4. Radarmodul gemäß Anspruch 3, wobei der Träger (112) ferner ein Gehäuse (114) aufweist, welches zumindest die Radarsignalquelle (102) umhaust.

5. Radarmodul gemäß Anspruch 4, wobei der Hohlleiter (106) an einer Öffnung des Gehäuses angeordnet ist, durch welche der Radarsignalleiter (104) in die Öffnung (108) des Hohlleiters (106) hineinragt, und
wobei der Hohlleiter (106) und das Gehäuse (114) einteilig ausgeführt sind.

6. Radarmodul gemäß einem der Ansprüche 3 bis 5, wobei die Radarsignalquelle (102) mittels einer form-, kraft- und/oder stoffschlüssigen Verbindung (118), insbesondere einer Klebverbindung, an dem Träger (112) befestigt ist,
wobei die form-, kraft- und/oder stoffschlüssige Verbindung (118) eine Erstreckungshöhe (D, D1) entlang der Axialrichtung (Y) aufweist.

7. Radarmodul gemäß Anspruch 6, wobei die Überlappung (Z, Z1) zwischen dem Radarsignalleiter (104) und dem Hohlleiter (106) eine Toleranz der Erstreckungshöhe (D, D1) der form-, kraft- und/oder stoffschlüssige Verbindung (118) ermöglicht.

8. Radarmodul gemäß einem der vorherigen Ansprüche, wobei zwischen dem Hohlleiter (106) und dem Radarsignalleiter (104) ein Spalt (130) ausgebildet ist, so dass keine Kraftübertragung (F, F1) von dem Hohlleiter (106) auf den Radarsignalleiter (104) stattfindet.

9. Radarmodul gemäß einem der vorherigen Ansprüche, wobei der Radarsignalleiter ein von dem Füllgut abgewandtes Ende aufweist,
wobei das abgewandte Ende in einen definierten Abstand zur Radarsignalquelle angeordnet ist.

10. Füllstandradar mit einem Radarmodul nach einem der Ansprüche 1 bis 9.

11. Verwendung eines Radarmoduls (100) nach einem der Ansprüche 1 bis 9 zur Prozessautomatisierung oder Überwachung eines Raumbereichs anstelle einer Lichtschranke.

12. Verfahren zur Montage eines Radarmoduls, die Schritte aufweisend:
- Anordnen (S1) eines Radarsignalleiters, zum Leiten und/oder Emittieren des Radarsignals, über einer Radarsignalquelle (102), eingerichtet zum Erzeugen und/oder Aussenden eines Radarsignals,
- Montieren (S2) eines Hohlleiters (106) zur Ausbildung einer überlappenden Verbindung zwischen dem Hohlleiter (106) und dem Radarsignalleiter (104), so dass der Hohlleiter (106) von der Radarsignalquelle (102) und/oder dem Radarsignalleiter (104) mechanisch entkoppelt ist,
- Herstellen (S3) einer form-, kraft- und/oder stoffschlüssigen Verbindung (118) zwischen einem Träger (112) und der Radarsignalquelle (102),
wobei die form-, kraft- und/oder stoffschlüssige Verbindung (118) eine Dicke (D, D1) aufweist,
wobei eine Toleranz der Dicke (D, D1) der form-, kraft- und/oder stoffschlüssige Verbindung (118) durch die überlappende Verbindung ermöglicht wird.

13. Verfahren nach Anspruch 12, zur Montage eines Radarmoduls nach einem der Ansprüche 1 bis 9.

## Claims

1. A radar module (100) for process automation comprising:
- a radar signal source (102) configured to generate and to emit a radar signal,
- a dielectric radar signal conductor (104) mounted at the radar signal source (102) and configured to receive the radar signal,
- a waveguide (106), the waveguide (106) having an opening (108), wherein the opening (108) establishes an axial direction (Y),
wherein the radar signal conductor (104) protrudes into the opening (108) of the waveguide (106) such that the waveguide (106) and the radar signal conductor (104) form an overlap (Z) along the axial direction (Y) for coupling the radar signal into the waveguide (106), **characterized in that** the waveguide (106) is mechanically decoupled from the radar signal source (102) and/or the radar signal conductor (104).

2. The radar module according to claim 1, wherein the radar signal conductor (104) is spaced from the waveguide (106) in a range (110) of the overlap (Z) orthogonally (X) to the axial direction (Y), circumferentially around the radar signal conductor (104).

3. The radar module according to any one of the preceding claims, wherein the radar module (100) comprises a carrier (112), wherein the radar signal source (102) is attached to the carrier (112).

4. The radar module according to claim 3, wherein the carrier (112) further comprises a housing (114) enclosing at least the radar signal source (102).

5. The radar module according to claim 4, wherein the waveguide (106) is arranged at an opening of the housing through which the radar signal conductor (104) protrudes into the opening (108) of the waveguide (106), and wherein the waveguide (106) and the housing (114) are configured as a unitary piece.

6. The radar module according to any one of claims 3 to 5, wherein the radar signal source (102) is attached to the carrier (112) by means of a form-fitting, force-fitting and/or material-fitting connection (118), in particular an adhesive connection,
wherein the form-fitting, force-fitting and/or material-fitting connection (118) features an extension height (D, D1) along the axial direction (Y).

7. The radar module according to claim 6, wherein the overlap (Z, Z1) between the radar signal conductor (104) and the waveguide (106) allows a tolerance of the extension height (D, D1) of the form-fit, force-fit and/or material-fit connection (118).

8. The radar module according to any one of the previous claims, wherein a gap (130) is formed between the waveguide (106) and the radar signal conductor (104), so that no force transmission (F, F1) is provided from the waveguide (106) to the radar signal guide (104).

9. The radar module according to any one of the preceding claims, wherein the radar signal conductor has an end remote from the filling material, wherein the remote end is arranged at a well-defined distance from the radar signal source.

10. A fill level radar comprising a radar module according to any one of claims 1 to 9.

11. A use of a radar module (100) according to any one of claims 1 to 9 for process automation or monitoring of a spacial area instead of a light barrier.

12. A method of assembling a radar module, comprising the steps of:
- arranging (S1) a radar signal conductor, for conducting and/or emitting the radar signal, above a radar signal source (102) configured to generate and/or emit a radar signal,
- mounting (S2) a waveguide (106) for establishing an overlapping connection between the waveguide (106) and the radar signal conductor (104),
- forming (S3) a form-fit, force-fit and/or material-fit connection (118) between a carrier (112) and the radar signal source (102),
wherein the form-fit, force-fit and/or material-fit connection (118) has a thickness (D, D1), wherein a tolerance of the thickness (D, D1) of the form-fit, force-fit, and/or material-fit connection (118) is enabled by the overlapping connection.

13. The method of claim 12, for assembling a radar module according to any one of claims 1 to 9.

## Revendications

1. Module radar (100) pour l'automatisation de processus, comportant :
- une source de signal radar (102) adaptée pour générer et envoyer un signal radar,
- un conducteur de signal radar diélectrique (104) qui est fixé sur la source de signal radar (102), adapté pour recevoir le signal radar,
- un guide d'ondes (106), dans lequel le guide d'ondes (106) comporte un orifice (108),
dans lequel l'orifice (108) forme une direction axiale (Y), dans lequel le conducteur de signal radar (104) fait saillie dans l'orifice (108) du guide d'ondes (106) de telle sorte que le guide d'ondes (106) et le conducteur de signal radar (104) forment un chevauchement (Z) le long de la direction axiale (Y) afin de coupler le signal radar dans le guide d'ondes (106), **caractérisé en ce que** le guide d'ondes (106) est mécaniquement découplé de la source de signal radar (102) et/ou du conducteur de signal radar (104).

2. Module radar selon la revendication 1, dans lequel le conducteur de signal radar (104) est espacé du guide d'ondes (106) dans la zone (110) du chevauchement (Z) orthogonalement à la direction axiale (Y), de manière circonférentielle autour du conducteur de signal radar (104) .

3. Module radar selon l'une des revendications précédentes, dans lequel le module radar (100) comprend un support (112), dans lequel la source de signal radar (102) est fixée sur le support (112).

4. Module radar selon la revendication 3, dans lequel le support (112) comporte en outre un boîtier (114) qui entoure au moins la source de signal radar (102).

5. Module radar selon la revendication 4, dans lequel le guide d'ondes (106) est agencé sur une ouverture du boîtier, à travers laquelle le conducteur de signal radar (104) fait saillie dans l'orifice (108) du guide d'ondes (106), et dans lequel le guide d'ondes (106) et le boîtier (114) sont réalisés d'un seul tenant.

6. Module radar selon l'une des revendications 3 à 5, dans lequel la source de signal radar (102) est fixée sur le support (112) au moyen d'un assemblage par complémentarité de formes, d'un assemblage à force et/ou d'un assemblage par liaison de matière (118), en particulier un assemblage par collage,
dans lequel l'assemblage par complémentarité de formes, l'assemblage à force et/ou l'assemblage par liaison de matière (118) a une hauteur d'extension (D, D1) le long de la direction axiale (Y).

7. Module radar selon la revendication 6, dans lequel le chevauchement (Z, Z1) entre le conducteur de signal radar (104) et le guide d'ondes (106) permet une tolérance de la hauteur d'extension (D, D1) de l'assemblage par complémentarité de formes, de l'assemblage à force et/ou de l'assemblage par liaison de matière (118).

8. Module radar selon l'une des revendications précédentes, dans lequel un espace (130) est formé entre le guide d'ondes (106) et le conducteur de signal radar (104), de sorte qu'aucune transmission de force (F, F1) s'effectue du guide d'ondes (106) au conducteur de signal radar (104).

9. Module radar selon l'une des revendications précédentes, dans lequel le conducteur de signal radar comporte une extrémité opposée au matériau de remplissage,
dans lequel l'extrémité opposée est agencée à une distance définie par rapport à la source de signal radar.

10. Radar de niveau de remplissage comportant un module radar selon l'une des revendications 1 à 9.

11. Utilisation d'un module radar (100) selon l'une des revendications 1 à 9 pour l'automatisation de processus ou la surveillance d'une région spatiale, à la place d'une barrière lumineuse.

12. Procédé de montage d'un module radar, comportant les étapes consistant à :
- agencer (S1) un conducteur de signal radar, pour guider et/ou émettre le signal radar, par l'intermédiaire d'une source de signal radar (102), configuré pour générer et/ou envoyer un signal radar,
- monter (S2) un guide d'ondes (106) pour former une liaison avec chevauchement entre le guide d'ondes (106) et le conducteur de signal radar (104), de sorte que le guide d'ondes (106) est mécaniquement découplé de la source de signal radar (102) et/ou du conducteur de signal radar (104),
- créer (S3) un assemblage par complémentarité de formes, un assemblage à force et/ou un assemblage par liaison de matière (118) entre un support (112) et la source de signal radar (102),
dans lequel l'assemblage par complémentarité de formes, l'assemblage à force et/ou l'assemblage par liaison de matière (118) a une épaisseur (D, D1),
dans lequel une tolérance de l'épaisseur (D, D1) de l'assemblage par complémentarité de formes, de l'assemblage à force et/ou de l'assemblage par liaison de matière (118) est permise par la liaison avec chevauchement.

13. Procédé selon la revendication 12 pour le montage d'un module radar selon l'une des revendications 1 à 9.
